# DEMANDE DE BREVET EUROPEEN

(11) **EP 2 511 089 A1**
(43) Date de publication de la demande: **17.10.2012**
(21) Numéro de dépôt: 11162559.6
(22) Date de dépôt: 15.04.2011
(51) Int. Cl.: B32B 1/02, B32B 7/02, B29C 45/00, B65D 65/40

(54) **Structure multicouche d'emballage**

(71) Demandeur: Aisapack Holding SA, 1896 Vouvry (CH)
(72) Inventeur: Mathieu, Stéphane, 74500 Publier (FR); Pellissier, Joachim, 1926 Fully (CH)
(74) Mandataire: Grosfillier, Philippe

(57) **Abrégé**

L'invention concerne une structure multicouche obtenue par moulage et destinée à former au moins une partie de la paroi d'un emballage; ladite structure comprenant une couche barrière à l'oxygène, dite « couche passive », et une autre couche barrière à l'oxygène, dite « couche active », composée d'au moins une résine dans laquelle sont dispersés des absorbeurs d'oxygène ; la perméabilité de la résine de la couche active étant au moins 50 fois supérieure à la perméabilité de la résine de la couche passive.

L'invention concerne également un emballage comprenant ladite structure multicouche.

## Description

### Domaine de l'invention

L'invention se situe dans le domaine de l'emballage et plus particulièrement dans celui des structures multicouches formant au moins une partie de la paroi d'un emballage.

### Etat de la technique

De nombreux produits se dégradent lorsqu'ils sont en contact avec des molécules d'oxygène. Les produits emballés peuvent entrer en contact avec l'oxygène d'après deux raisons principales.

La première raison est liée à l'air emprisonné dans l'emballage au moment du conditionnement lorsque le produit ne rempli pas complètement la cavité du récipient. La seconde est liée à la migration à travers la paroi de l'emballage des molécules d'oxygène présentes dans l'air ambiant.

Plusieurs approches ont été proposées pour palier à ces difficultés, comme la substitution de l'air emprisonné dans l'emballage par un gaz inerte, comme l'utilisation de structures multicouches ou comme l'utilisation d'absorbeurs d'oxygène que l'on emprisonne dans la paroi de l'emballage.

Il existe de nombreux emballages ou parties d'emballage qui sont fabriqués par injection moulage par ou par compression moulage. L'amélioration des propriétés barrière de ces emballages moulés a fait l'objet de nombreux développements ces dernières années. Les demandes de brevets WO2007111857 et WO2008096290 décrivent l'amélioration des objets moulés par injection ou compression multicouche.

Le développement des absorbeurs d'oxygène a permis dans certains cas de remplacer les structures multicouches plus complexes à fabriquer par des parois d'emballages monocouche comportant des absorbeurs d'oxygène. Cependant, cette solution ne peut être utilisée que lorsque la durée de conservation du produit est réduite dans le temps.

Contrairement aux emballages fabriqués à partir de films pour lesquels il est possible d'obtenir une barrière à l'oxygène presque totale - c'est le cas par exemple lorsque la structure comporte un film d'aluminium - il n'est pas possible aujourd'hui d'obtenir un niveau de barrière aussi élevé pour des emballages ou parties d'emballage fabriqués par injection ou compression moulage.

Certains emballages comportent une partie seulement qui est moulée. C'est le cas par exemple des tubes flexibles pour lesquels la tête est fabriquée par moulage. Ces emballages présentent une perméabilité à l'oxygène généralement plus élevée dans la partie moulée malgré les efforts réalisés pour améliorer les propriétés barrières. Ces emballages présentent également une imperméabilité à l'oxygène fortement réduite au niveau de la zone de transition entre la pièce moulée et le film formant la partie flexible. Pour ces raisons, il est difficile d'utiliser des emballages comportant une partie moulée pour conserver des produits très sensibles à l'oxygène ou de conserver pendant une longue durée des produits se dégradant avec l'oxygène.

### Exposé de l'invention

L'invention a pour objet de remédier aux problèmes précités grâce à une amélioration significative des propriétés barrières à l'oxygène des emballages moulés.

L'invention consiste en une structure multicouche ayant une très faible perméabilité à l'oxygène grâce à une synergie inattendue entre au moins une couche barrière passive et une couche barrière active. On définit par « couche barrière passive », une couche de résine ayant une faible perméabilité à l'oxygène et par « couche barrière active », une couche de résine comportant des absorbeurs d'oxygène.

L'invention résulte d'une synergie entre les couches de barrières passives et actives ainsi que de leur position relative dans la structure multicouche.

L'invention permet également d'améliorer significativement l'imperméabilité à l'oxygène d'emballages comprenant une partie moulée liée à une partie flexible composée de films.

Dans la suite de l'exposé des structures multicouches obtenues par moulage sont présentées. Afin de faciliter leur compréhension, on utilisera toujours la même convention consistant à décrire la structure multicouche depuis la surface externe de l'emballage qui est généralement la partie visible, vers la surface interne de l'emballage qui est en contact avec le produit emballé. Les références suivantes seront utilisées pour la clarté de l'exposé :
- 1 : couche barrière passive à l'oxygène
- 2 : couche barrière active à l'oxygène
- 3 : couche faiblement barrière à l'oxygène

L'invention consiste en l'utilisation d'au moins deux résines distinctes dont le rapport des perméabilités à l'oxygène est supérieur ou égal 50. La première résine dont la perméabilité à l'oxygène est la plus faible forme la couche barrière passive à l'oxygène 1. Des absorbeurs d'oxygène sont dispersés dans la seconde résine dont la perméabilité à l'oxygène est au moins cinquante fois supérieure et forme la couche barrière active à l'oxygène 2. L'association des couches 1 et 2 conduit à des durées de conservation considérablement améliorées.

L'invention consiste également en la réalisation d'une structure multicouche par injection ou compression moulage, ladite structure comportant au moins une couche barrière passive et une couche barrière active ; la couche barrière active étant située entre la couche barrière passive et le produit emballé.

Afin de mieux comprendre l'effet inattendu de l'invention, considérons les 3 exemples suivants :
Exemple 1 : Soit une structure multicouche d'épaisseur totale notée E formant un emballage. La structure multicouche est composée d'une première résine fortement perméable à l'oxygène et d'une deuxième résine de perméabilité à l'oxygène au moins 50 fois inférieure et formant une couche barrière passive de faible épaisseur notée Ep. Cette structure multicouche conduit à une durée de conservation du produit notée Dp. Il est connu par l'homme du métier qu'en doublant l'épaisseur de la couche barrière passive, ou en ajoutant une deuxième couche barrière passive d'épaisseur identique, la durée de conservation du produit est sensiblement doublée.
Exemple 2 : Soit l'emballage considéré dans l'exemple 1 dont la paroi d'épaisseur E est composée uniquement de ladite première résine fortement perméable à l'oxygène contenant 15% d'absorbeur d'oxygène. La durée de conservation dudit produit dans cet emballage est notée Da. Il est connu également par l'homme du métier qu'en doublant la quantité d'absorbeur d'oxygène dans la paroi de l'emballage, la durée de conservation du produit est sensiblement doublée.
Exemple 3 : Le troisième exemple illustre l'effet inattendu de l'invention. Soit l'emballage considéré dans les exemples 1 et 2 dont la paroi d'épaisseur E est composée de ladite première résine fortement perméable et contenant 15% d'absorbeurs d'oxygène et de ladite deuxième résine formant une couche barrière passive d'épaisseur Ep. La durée de conservation du produit dans l'emballage est largement supérieure à la somme de Dp et Da.

Un premier mode de réalisation de l'invention consiste en une structure multicouche comprenant une couche barrière active et une couche barrière passive.

Un deuxième mode de réalisation de l'invention consiste en une structure comportant au moins une couche barrière active 2 emprisonnée entre deux couches barrières passives 1 ; ladite couche barrière active 2 étant composée d'absorbeurs d'oxygène dispersés dans une première résine et la couche barrière passive 1 étant composée d'une seconde résine de perméabilité à l'oxygène au moins 50 fois inférieure à celle de ladite première résine.

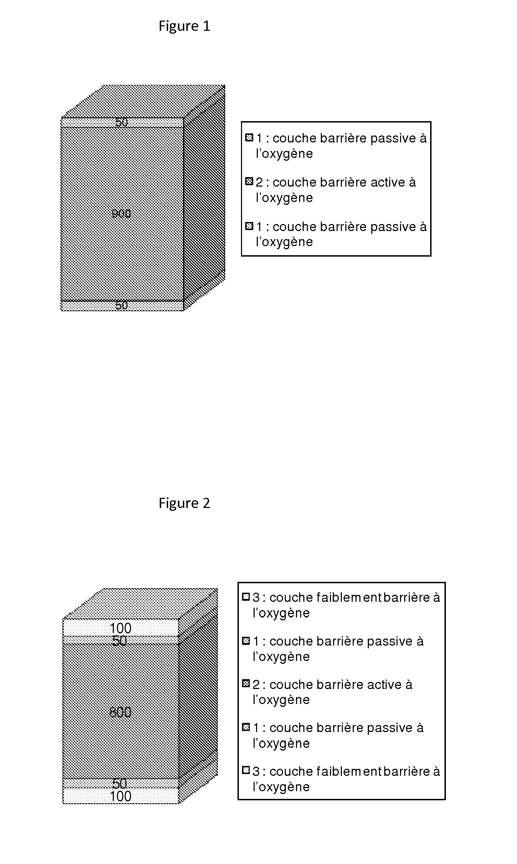

Un quatrième exemple relatif au premier mode de l'invention est illustré figure 1 et consiste en une structure comportant successivement les couches 1 / 2 / 1. Le fait d'avoir la couche active 2 emprisonnée entre deux couches passives 1 permet d'éviter d'éventuelles interactions entre le produit emballé et les absorbeurs d'oxygène. Il est observé dans certains cas une altération de l'aspect de l'emballage lorsque les absorbeurs d'oxygène sont utilisés dans la couche formant la surface de l'emballage (évolution de la coloration). Ce premier exemple de réalisation permet d'éviter cette difficulté et permet l'obtention d'emballage de grande qualité visuelle, sans altération de la couleur dans le temps. La couche 1 est par exemple en polyamide amorphe PA6I/6T présentant une faible perméabilité à l'oxygène en milieu humide. La couche 2 se compose par exemple d'absorbeurs d'oxygènes dispersés dans du polypropylène.

Un cinquième exemple relatif au premier mode de l'invention est illustré figure 2 et consiste en une structure comportant les couches successives 3 / 1 / 2 / 1 / 3. Les couches 3 formant les surfaces externe et interne de l'emballage sont constituées d'une résine faiblement imperméable à l'oxygène. Par exemple, cette couche est en polyéthylène ce qui permet un soudage facilité, l'apport de propriétés organoleptiques, l'apport de propriétés barrières à l'humidité, et une facilité de mise en oeuvre. La couche 1 se compose d'une résine barrière à l'oxygène comme par exemple une résine d'éthylène vinyle alcool. La couche barrière active 2 est par exemple une couche de polyéthylène contenant des absorbeurs d'oxygène.

L'ajout de fines couches de liant entre les couches afin d'améliorer la cohésion de la structure n'est pas décrit de façon systématique dans cet exposé. Cette variante est difficile à obtenir par injection dans des moules multi-empreintes du fait du grand nombre de couches. Par contre cette variante peut être obtenue aisément par compression moulage d'une dose multicouche co-extrudée. Afin de ne pas compliquer l'exposé, les couches de liant ne sont pas décrites systématiquement sachant que l'homme du métier sait quand ces couches doivent être ajoutées.

Un troisième mode de réalisation de l'invention consiste en une structure comportant au moins une couche barrière passive 1 emprisonnée entre deux couches barrières actives 2; ladite couche barrière active 2 étant composée d'absorbeurs d'oxygène dispersés dans une première résine et la couche barrière passive 1 étant composée d'une seconde résine de perméabilité à l'oxygène au moins 50 fois inférieure à celle de ladite première résine.

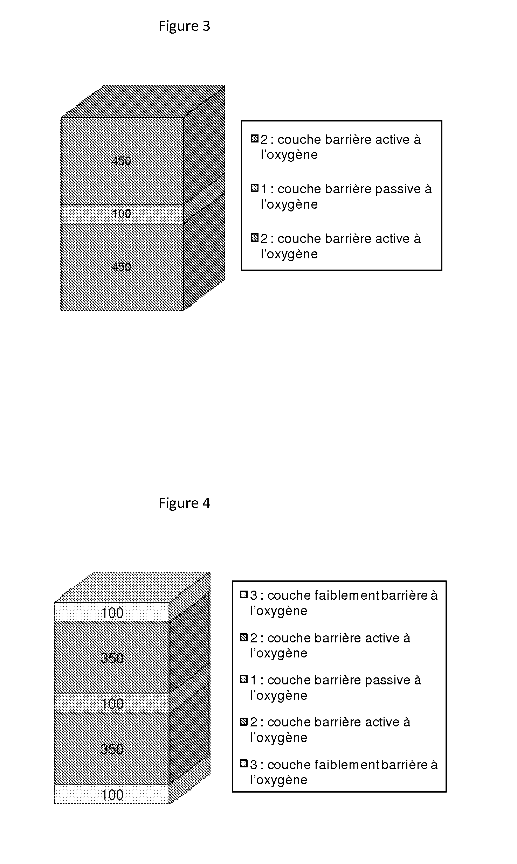

Un sixième exemple relatif au second mode de réalisation de l'invention conduit à une structure multicouche du type 2 / 1 / 2 illustrée figure 3. Ce second mode est avantageux lorsque l'emballage comporte des parties assemblées. Lorsque l'assemblage se fait sur la surface externe de l'objet moulé, il est avantageux d'avoir des absorbeurs d'oxygènes également dans la couche formant la surface externe de l'emballage. La perméabilité de la zone soudée est ainsi fortement diminuée. C'est le cas par exemple des goulots de bouteilles ayant une zone d'étanchéité avec un bouchon au niveau de la surface externe. C'est le cas également des goulots qui sont soudées sur des poches souples et pour lesquels l'étanchéité de la zone de soudage est très nettement améliorée.

Un septième exemple relatif au second mode de réalisation de l'invention est illustré figure 4 et correspond à une structure comportant les 5 couches successives 3 / 2 / 1 / 2 / 3. Les couches neutres en surface permettent d'améliorer les propriétés esthétiques de l'emballage et éviter le contact direct des absorbeurs d'oxygène avec le produit emballé.

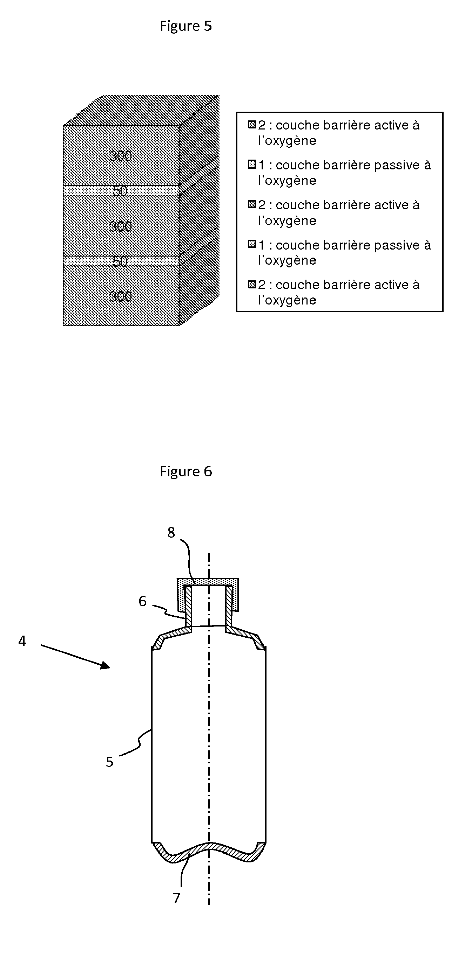

Un huitième exemple est une combinaison du premier et deuxième mode de réalisation de l'invention. Cet exemple illustré figure 5 consiste en une structure comportant les couches successives 2 / 1 / 2 / 1 / 2. Cette structure est particulièrement intéressante lorsque les objets fabriqués selon l'invention sont liés à une autre structure multicouche confectionnée à partir de films. C'est le cas par exemple des tubes d'emballage flexible qui comportent un corps tubulaire flexible et une épaule moulée. L'assemblage de l'épaule et du corps tubulaire crée une discontinuité des couches barrières passive entre le corps tubulaire et l'épaule. Cette discontinuité engendre généralement une forte diminution de l'imperméabilité à l'oxygène de l'emballage, problème auquel l'invention permet de remédier.

D'autres exemples ont été réalisés avec la bouteille 4 de contenance 375 ml illustrée figure 6. La bouteille 4 est composée d'un corps flexible 5, d'un goulot 6, d'un fond 7 et d'un bouchon 8. Le corps flexible 5 est formé d'une structure multicouche comportant une couche d'aluminium de 12 microns. Ce corps flexible 5 d'épaisseur 0.3 mm comporte également des couches de polypropylène et est fabriqué par soudage. L'imperméabilité à l'oxygène du corps flexible est presque totale grâce à la couche d'aluminium emprisonnée dans la structure multicouche. Le goulot 6 et le fond 7 comportent également une structure multicouche. La présente invention est utilisée pour améliorer l'imperméabilité à l'oxygène du goulot 6 ainsi que du fond 7. Le bouchon 8 pourrait avoir également une structure multicouche telle que décrite dans l'invention. Pour des raisons d'ordre pratique, il a été utilisé des bouchons disponibles commercialement. Ces bouchons 8 possèdent un joint au niveau de l'interface avec le goulot 6. Ce joint, également appelé liner, assure l'étanchéité entre le goulot et le bouchon et garantit une faible perméabilité à l'oxygène du bouchon grâce à une matière barrière située dans ledit joint.

Plusieurs versions de la bouteille 4 ont été réalisées en faisant varier la structure multicouche du goulot 6 et du fond 7 et correspondent aux exemples notés respectivement 9 à 13. La structure multicouche du goulot 6 et du fond 7 a été réalisée avec les matières suivantes :
- Couche 1 : Polypropylène avec 10% d'absorbeur d'oxygène.
- Couche 2 : Ethylène vinyle alcool
- Couche 3 : Polypropylène

Les propriétés barrières à l'oxygène des bouteilles sont comparées en mesurant le temps pour que le liquide contenu par la bouteille reçoive 5 ppm (partie par million) d'oxygène. Ces mesures sont faites en laboratoire selon un protocole rigoureux de mesure. Un appareil de laboratoire de marque Presens est utilisé pour quantifier la quantité d'oxygène qui migre dans l'emballage. Les résultats de ces mesures sont résumés dans le tableau suivant :

| Temps (jours) pour passage de 5 ppm d'O2 dans l'emballage | | | | |
|---|---|---|---|---|
| ***ppm 02*** | ***Structure*** | ***Temps*** | *Epaisseur **Microns*** | *Absorbeurs **d'O2 (%**)* |
| Exemple 9 Barrière Passive seule | 3/1/3 | 7 jours | 450/100/450 | 0 |
| Exemple 10 Barrière Active seule | 2 | 32 jours | 1000 | 10 |
| Exemple 11 | 2/1/2 | 331 jours | 450/100/450 | 10 |
| Exemple 12 | 2/1/2/1/2 | 237 jours | 300/50/300/50/300 | 10 |
| Exemple 13 | 1/2 | 619 jours | 100/900 | 10 |

Les exemples 9 et 10 correspondent à l'art antérieur et servent de référence.

L'exemple 9 illustre aux propriétés de la bouteille 4 lorsque le goulot 6 et le fond 7 comportent une structure multicouche avec une barrière passive seulement. La durée de migration de 5 ppm d'oxygène à l'intérieur de l'emballage est de 7 jours.

L'exemple 10 correspond aux propriétés de la bouteille 4 lorsque le goulot 6 et le fond 7 se composent d'une seule couche contenant des absorbeurs d'oxygène. La durée de migration de 5 ppm d'oxygène à l'intérieur de la bouteille est de 32 jours.

L'exemple 11 correspond aux propriétés de la bouteille 4 lorsque le goulot 6 et le fond 7 comportent une couche barrière passive emprisonnée entre deux couches barrières actives. Cette structure multicouche est illustrée figure 3. La durée de migration de 5 ppm d'oxygène à l'intérieur de l'emballage est de 331 jours. La durée de conservation du produit dans cette bouteille est améliorée d'un facteur 10 par rapport à la bouteille de l'art antérieur décrite dans l'exemple 10, et d'un facteur 47 par rapport à la bouteille de l'art antérieur décrite dans l'exemple 9.

L'exemple 12 illustre les propriétés de la bouteille 4 lorsque le goulot 6 et le fond 7 comportent la structure 5 couches illustrée figure 5. La durée de migration de 5ppm d'oxygène dans cette bouteille est de 237 jours. La durée de conservation du produit dans cette bouteille est augmentée d'un facteur 7 par rapport à la bouteille de l'art antérieur décrite dans l'exemple 10, et d'un facteur 33 par rapport à la bouteille de l'art antérieur décrite dans l'exemple 9.

L'exemple 13 décrit les propriétés de la bouteille 4 lorsque le goulot 6 et le fond 7 comportent une couche barrière passive 1 et une couche barrière active 2, la couche barrière active étant située à l'intérieur de l'emballage. La durée de migration de 5ppm d'oxygène dans cette bouteille est de 619 jours. La durée de conservation du produit dans cette bouteille est augmentée d'un facteur 19 par rapport à la bouteille de l'art antérieur décrite dans l'exemple 10, et d'un facteur 88 par rapport à la bouteille de l'art antérieur décrite dans l'exemple 9.

La structure multicouche décrite dans l'exemple 13 est particulièrement performante mais cependant difficilement réalisable par moulage multi-matières. En effet, pour des raisons économiques il est important de réduire d'épaisseur de la couche barrière passive 1, ce qui est difficile lorsque la couche 1 est réalisée par injection ou compression moulage. Il existe cependant des technologies alternatives permettant d'obtenir cette structure bicouche de façon économique. Une première alternative consiste à surmouler un film contenant la barrière passive avec une résine comportant des absorbeurs d'oxygène. Cette technologie est limitée à des géométries d'objet relativement simples. Une deuxième alternative consiste à mouler un objet monocouche avec une résine contenant des absorbeurs d'oxygènes puis déposer postérieurement un revêtement qui apporte une barrière passive à la surface de l'objet moulé. De nombreux revêtement sont connus dans l'art antérieur comme par exemple les couches minces obtenues par déposition plasma ou évaporation en phase gazeuse. Selon ces procédés la couche barrière passive est généralement soit de type oxyde de silicium ou aluminium, soit de type carbone amorphe.

L'invention ne se limite pas aux exemples précités et matériaux énumérés. Il existe une grande variété de résine ou matériaux pouvant être utilisés pour former la couche barrière passive. En général, on considère que le matériau peut être utilisé en tant que barrière passive lorsque sa valeur de perméabilité à l'oxygène est au moins 50 fois plus faible que celle du matériau dans lequel on ajoute des absorbeurs d'oxygène pour former une couche barrière active.

De même, il existe une grande variété d'absorbeurs d'oxygène et ces produits sont en grande évolution actuellement. Dans l'invention on appelle couche active, une couche contenant au moins des éléments qui réagissent avec l'oxygène afin de limiter la migration des molécules d'oxygène à l'intérieur de l'emballage. Dans certains produits, les absorbeurs d'oxygène sont associés à une matière barrière qui se disperse sous forme de lamelles afin d'augmenter l'efficacité en augmentant la tortuosité.

Comme il l'a été exposé précédemment, l'invention permet d'améliorer considérablement les propriétés barrières des pièces moulées par injection ou compression moulage. Cependant, en travaillant sur la mise au point de l'invention, les inventeurs ont observé que l'imperméabilité à l'oxygène de l'emballage pouvait encore être améliorée en appliquant également l'invention à d'autres parties de l'emballage.

Lorsque l'emballage est un tube flexible, les inventeurs ont observé que l'imperméabilité à l'oxygène de l'emballage était améliorée en appliquant l'invention non seulement à la tête du tube comme exposé précédemment, mais également au corps tubulaire. Lorsque le corps tubulaire est co-extrudé, des absorbeurs d'oxygène peuvent être incorporés dans la couche la plus perméable afin d'obtenir des structures multicouches telles que décrites dans l'invention. D'autres tubes flexibles sont obtenus à partir d'un film multicouche qui est soudé sur lui-même pour former le corps cylindrique. Lors de la fabrication de ce film multicouche par lamination ou par co-extrusion des absorbeurs d'oxygène sont ajoutés afin d'obtenir une structure multicouche telle que décrite dans l'invention.

Il a été observé que lorsque l'emballage est formé de plusieurs parties dont au moins une partie moulée, il est avantageux d'appliquer l'invention non seulement à la partie moulée mais également aux autres parties de l'emballage. C'est le cas notamment des emballages formés à partir de films et comportant un goulot, des emballages extrudés soufflés comportant un bouchon, ou encore des emballages ayant une structure multicouche à base de carton et comportant un goulot moulé.

Il convient enfin de relever que l'invention peut être également utilisée dans des emballages formés de films multicouches ou formés de n'importe quelle autre structure multicouche ne comprenant pas nécessairement une ou plusieurs parties moulées.

## Revendications

1. Structure multicouche obtenue par moulage et destinée à former au moins une partie de la paroi d'un emballage; ladite structure comprenant une couche barrière à l'oxygène, dite « couche passive », et une autre couche barrière à l'oxygène, dite « couche active », composée d'au moins une résine dans laquelle sont dispersés des absorbeurs d'oxygène ; la perméabilité de la résine de la couche active étant au moins 50 fois supérieure à la perméabilité de la résine de la couche passive.

2. Structure multicouche selon la revendication 1 comprenant une autre couche passive, ladite couche active étant située entre les deux couches passives.

3. Structure multicouche selon la revendication 1 comprenant une autre couche active, ladite couche passive étant située entre les deux couches actives.

4. Structure multicouche selon la revendication 2 ou 3 comprenant les couches successives suivantes : active-passive-active-passive-active.

5. Structure multicouche selon l'une des revendications précédentes comprenant une couche faiblement barrière à l'oxygène dite neutre.

6. Structure multicouche selon la revendication 5 comprenant les couches successives suivantes : neutre-passive-active-passive-neutre.

7. Structure multicouche selon la revendication 5 comprenant les couches successives suivantes : neutre-active-passive-active-neutre.

8. Structure multicouche selon l'une des revendications précédentes dans laquelle la couche active est une couche en polyéthylène contenant des absorbeurs d'oxygène.

9. Structure multicouche selon l'une des revendications précédentes dans laquelle la couche passive est une couche d'éthylène vinyle alcool.

10. Structure multicouche selon l'une des revendications 5 à 9 dans laquelle la couche neutre est une couche en polyéthylène.

11. Elément de tube comprenant une structure selon l'une des revendications précédentes, ledit élément étant une tête de tube, un bouchon, un fond ou une jupe.

12. Emballage comprenant un premier élément fabriqué selon l'une des revendications 1 à 10 et un deuxième élément qui n'est pas obtenu par moulage et comprenant une couche barrière à l'oxygène, dite « couche passive », et une autre couche barrière à l'oxygène, dite « couche active », composée d'au moins une résine dans laquelle sont dispersés des absorbeurs d'oxygène ; la perméabilité de la résine de la couche active étant au moins 50 fois supérieure à la perméabilité de la résine de la couche passive.

13. Emballage comprenant une structure multicouche selon l'une des revendications 1, 3, 4, 5, 7, 8, 9, 10 et un espace destiné à contenir un produit, ladite couche active étant située entre la couche passive et ledit espace.

14. Emballage comprenant une structure multicouche selon l'une des revendications 1, 2, 5, 6, 8, 9, 10 et un espace destiné à contenir un produit, ladite couche passive étant située entre la couche active et ledit espace.
